Europäisches Patentamt

European Patent Office

Office européen des brevets

(19)

(11) **EP 1 078 313 B1**

(12) **EUROPEAN PATENT SPECIFICATION**

(45) Date of publication and mention
of the grant of the patent:
**06.03.2002   Bulletin 2002/10**

(51) Int Cl.[7]: **G06F 1/035**
// G06F101:10

(21) Application number: **99922260.7**

(22) Date of filing: **14.05.1999**

(86) International application number:
**PCT/GB99/01359**

(87) International publication number:
**WO 99/59050 (18.11.1999 Gazette 1999/46)**

(54) **METHOD AND APPARATUS FOR DETERMINING THE APPROXIMATE VALUE OF A LOGARITHMIC FUNCTION**

VERFAHREN UND VORRICHTUNG ZUR BESTIMMUNG DES ANGENÄHERTEN WERTES EINER LOGARITHMISCHEN FUNKTION

PROCEDE ET DISPOSITIF PERMETTANT DE DETERMINER LA VALEUR APPROXIMATIVE D'UNE FONCTION LOGARITHMIQUE

(84) Designated Contracting States:
**BE DE ES FR GB IT NL**

(30) Priority: **14.05.1998   GB 9810204**

(43) Date of publication of application:
**28.02.2001   Bulletin 2001/09**

(73) Proprietor: **THE UNIVERSITY OF NEWCASTLE UPON TYNE**
**Newcastle Upon Tyne NE1 7RU (GB)**

(72) Inventor: **COLEMAN, John Nicholas**
**Newcastle Upon Tyne NE7 7UY (GB)**

(74) Representative: **Vinsome, Rex Martin**
**Urquhart-Dykes & Lord St Nicholas Chambers**
**Amen Corner**
**Newcastle-Upon-Tyne NE1 1PE (GB)**

(56) References cited:
• **OHHASHI M ET AL: "High-speed computation of unary functions" PROCEEDINGS OF 7TH SYMPOSIUM ON COMPUTER ARITHMETIC (CAT. NO. 85CH2146-9), URBANA, IL, USA, 4-6 JUNE 1985, pages 82-85, XP002106741 1985, Silver Spring, MD, USA, IEEE Comput. Soc. Press, USA; ISBN: 0-8186-0632-0**

## Description

The present invention relates to a logarithmic calculating apparatus and method, and relates particularly, but not exclusively, to a logarithmic calculating apparatus and method to be incorporated within microprocessors.

In electronic computational machines, it is known to represent real numbers upon which the machines operate using the "floating point" system, which will be familiar to persons skilled in the art. Using the "floating point" system, add, subtract and multiply operations can be exercised at reasonable speed. However, this system suffers from the drawback that divide operations take place much more slowly, and all operations are subject to a maximum rounding error of half of a least significant bit.

An alternative known approach is to represent real numbers as fixed-point logarithms, this approach generally being referred to as a Logarithmic Number System (LNS). Using such a system, multiplication and division operations may be implemented very rapidly and with no error, but this is at the expense of considerable complexity, latency and lack of accuracy in the addition and subtraction processes.

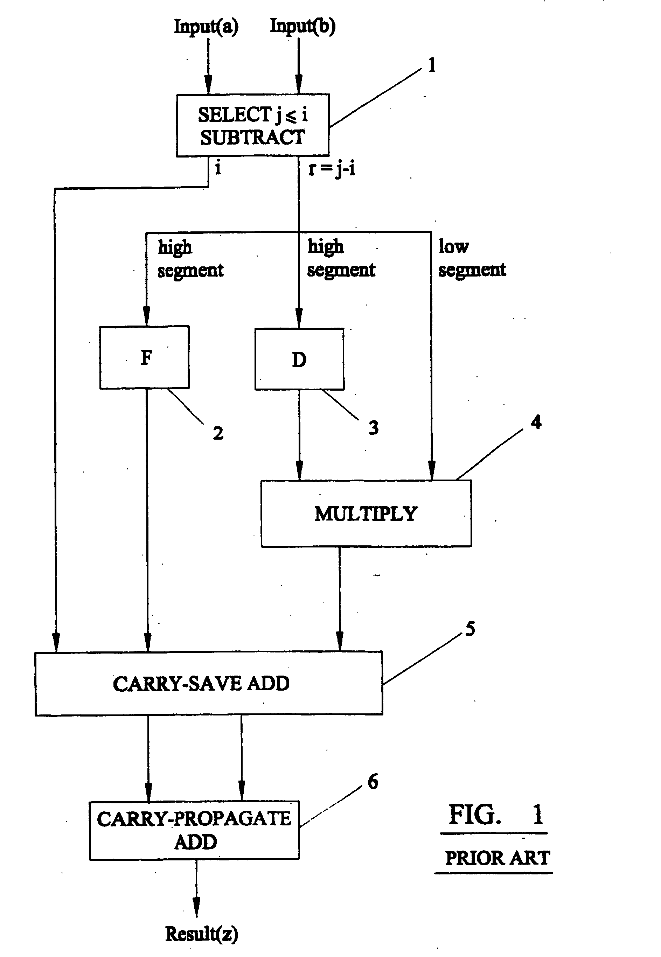

The operation of a conventional Logarithmic Number System, such as in existing arithmetic devices, is shown schematically in Figure 1, in which addition and subtraction operations require the evaluation of:

$$\log_2(2^i+2^j) = i + \log_2(1+2^{j-i}) \; ;$$

$$\log_2(2^i-2^j) = i + \log_2(1-2^{j-i}) \; ;$$

where j is less than or equal to i.

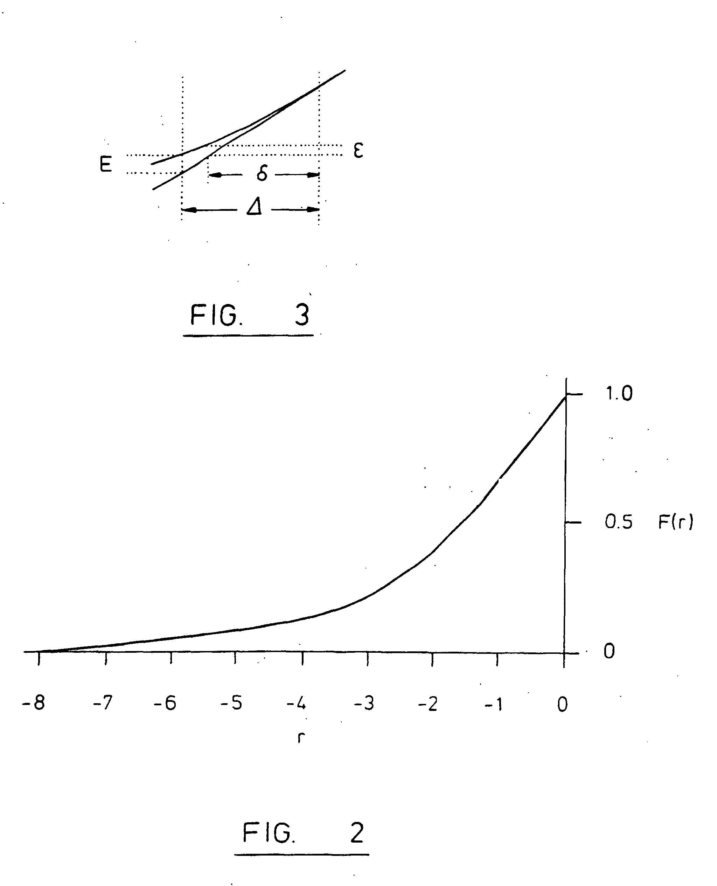

The logarithmic function $F(r = (j - i)) = \log_2(1+2^{j-i})$ for the add operation is shown in Figure 2. The device shown in Figure 1 is provided with look up tables which store the value of the function $F(r)$ for a range of discrete values of r. For practical applications, it is not possible to store the function for all values of r, as this would require a look up table of impracticable size, and so the value of the function is therefore stored at intervals of width $\Delta$. To further minimise the storage requirements, $\Delta$ is progressively increased as the function becomes more linear with decreasing r, and an intervening value of r lying in the nth interval is thus expressed as:

$$r=-\delta \; \{n=0\}; \; r=\Sigma(-\Delta_n) - \delta \; \{n > 0\}$$

For clarity, however, this description omits any further reference to the variation in $\Delta$, and the expression may be abbreviated to $r = -n\Delta - \delta$.

Alongside each value of the function $F(r)$ is stored its derivative, or slope at that point, $D(r)$. The function for any intermediate value of r is then obtained by interpolation with a first-order Taylor-series:

$$F(-n\Delta-\delta) = F(-n\Delta)-\delta D(-n\Delta)$$

Figure 3 shows in detail the function $F(r)$ within one interval of width $\Delta$. The error $\varepsilon$ between the true value of the Function $F(r)$ at position $\delta$ and that interpolated from the derivative at an adjacent stored position is shown. Referring to Figure 1, the apparatus has a selector/subtracter 1 for deriving the values of i and r=j-i, a look up table 2 containing the value of the function $F(r)$ at discrete values of r, and a look up table 3 containing values of the derivative $D(r)$ at discrete values of r. A multiply stage 4 multiplies the derivative $D(r)$ by $\delta$ and a carry-save-add stage 5 adds together the outputs of the selector/subtracter 1, look up table 2 and multiplier 4. The output of the carry-save-add stage 5 is then fed to a carry-propagate-add stage 6.

It can therefore be seen that following the initial subtraction in selector/subtracter 1 to obtain r, r is partitioned into lower and higher order segments, so effectively dividing by $\Delta$. The higher order segment represents n and is used to access the function $F(r)$ in look up table 2 and derivative $D(r)$ in look up table 3, whilst the lower order segment represents $\delta$. $F(-n\Delta)$ stored in look up table 2 is then added in the carry-save-add stage 5 to the product $\delta.D(-n\Delta)$ obtained from the multiplier 4, so as to obtain the approximation to $F(r)$ at the value of r of interest, to which is also added i, the addition being completed in the final carry-propagate-add stage 6, so as to yield the result.

As can be seen from Figure 3, the prior art arrangement described with reference to Figures 1 to 3 includes an interpolation error:

$$\varepsilon(n,\delta) = F(-n\Delta) - \delta.D(-n\Delta) - F(-n\Delta-\delta)$$

and for each n, $\varepsilon$ increases with $\delta$ to a maximum:

$$E(n) = F(-n\Delta) - \Delta.D(-n\Delta) - F(-n\Delta - \Delta) \text{ approximately.}$$

In any practical implementation, the error $\varepsilon$ must be minimised to an acceptable magnitude. This can be achieved by decreasing the increment $\Delta$, but at the cost of a considerable increase in the required capacity of the look up tables. Alternatively, methods are known which apply correction algorithms to minimise the error without increasing the necessary capacity of the look up tables. However, these all suffer from the drawback that they involve many extra stages in the computation process, which are executed serially, and therefore introduce speed limitations.

Preferred embodiments of the present invention seek to overcome the above disadvantages of the prior art.

According to an aspect of the present invention, there is provided a logarithmic calculating apparatus for determining the approximate value of a logarithmic function F(x) at a value of x of interest, the apparatus comprising:

first memory means for storing values of the function F(x) for a plurality of discrete values of x;

second memory means for storing values of F'(x), the slope of the function F(x), for said plurality of discrete values of x;

first multiplier means, for multiplying the value of F'(x) for a said discrete value of x adjacent to the value of x of interest by $\delta$, the difference between said adjacent discrete value of x and the value of x of interest;

third memory means for storing values of E(x), the approximate difference between $[F(x) + \Delta.F'(x)]$ and $F(x+\Delta)$ where x and $x+\Delta$ are the adjacent pair of said discrete values of x nearest to the value of x of interest;

fourth memory means for storing values of $P(\delta)$, the ratio of (i) the difference between $F(x+\delta)$ and $[F(x) + \delta.F'(x)]$, to (ii) E(x) for a plurality of values of $\delta$;

second multiplier means, for multiplying together the outputs of said third and fourth memory means; and

adder means for adding together the outputs of said first memory means, said first multiplier means and said second multiplier means to produce an output representing the approximate value of F(x) at the value of x of interest.

The present invention is based on the surprising observation that for many logarithmic functions, the ratio function $P(\delta)$ for a given value of $\delta$ is almost, although not exactly, constant for all values of n. This provides the advantage that it is possible to store for a single value of n a look up table containing the values of $P(\delta)$ at successive points throughout an interval of width $\Delta$. This in turn provides the advantage of enabling the logarithmic function F(x) to be calculated accurately for a value of x of interest without significantly increasing the necessary size of look up tables in the apparatus, and without significantly decreasing the speed of calculation. For example, the necessary size of look up tables may be doubled compared with the prior art, which does not cause significant problems. It will also be appreciated by persons skilled in the art that the quantities x, F(x), F'(x), $\delta$, E(x) and $\Delta$ defined above can be positive or negative.

In a preferred embodiment, said first and second multiplier means operate substantially simultaneously in use.

This provides the advantage of not decreasing the speed at which the calculation process can be carried out.

The apparatus may further comprise further adder means.

The or each adder means may be a carry-save-add means cooperating with at least one carry-propagate add means.

This provides the advantage of minimising the extent to which further adder stages slow down the calculation process.

In a preferred embodiment, said first, second, third and fourth memory means are accessed substantially simultaneously in use.

This provides the advantage of not decreasing the speed of the calculation process.

According to another aspect of the invention, there is provided a microprocessor including a logarithmic calculating apparatus as defined above.

According to a further aspect of the present invention, there is provided a method of determining the approximate value of a logarithmic function F(x) at a value of x of interest in a logarithmic calculating apparatus, the method comprising the steps of:

storing values of the function F(x) for a plurality of discrete values of x;

storing values of F'(x), the slope of the function F(x), for said plurality of discrete values of x;

multiplying the value of F'(x) for a said discrete value of x adjacent to the value of x of interest by $\delta$, the difference between said adjacent discrete value of x and the value of x of interest;

storing values of E(x), the approximate difference between $[F(x) + \Delta.F'(x)]$ and $F(x+\Delta)$ where x and $x+\Delta$ are the adjacent pair of said discrete values of x nearest to the value of x of interest ;

storing values of $P(\delta)$, the ratio of (i) the difference between $[F(x) +\delta.F'(x)]$ and $F(x+\delta)$, to (ii) E(x) for a plurality of values of $\delta$;

multiplying together the values of E(x) and $P(\delta)$ for the value of x of interest; and

adding together said values of F(x), $\delta.F'(x)$ and $E(x).P(\delta)$ to provide the approximate value of F(x) for the value of x of interest.

In a preferred embodiment, said multiplication steps are carried out substantially simultaneously.

Said addition step may be carried out by means of a carry-save-add stage cooperating with a subsequent carry-propagate-add stage.

The. stored values are preferably accessed substantially simultaneously.

This provides the advantage of not decreasing the speed of the calculation process.

A preferred embodiment of the invention will now be described, by way of example only and not in any limitative sense, with reference to the accompanying drawings, in which:-

Figure 1 is a schematic representation of a prior art Logarithmic Number System;

Figure 2 is a graph showing the variation of the logarithmic function $F(r) = \log_2(1+2^{j-i})$, where $r = j-i$, with r;

Figure 3 is a diagram showing the relationship between the quantities $\varepsilon$, $E(r)$, $\delta$ and $\Delta$; and

Figure 4 is a schematic representation of an apparatus embodying the present invention.

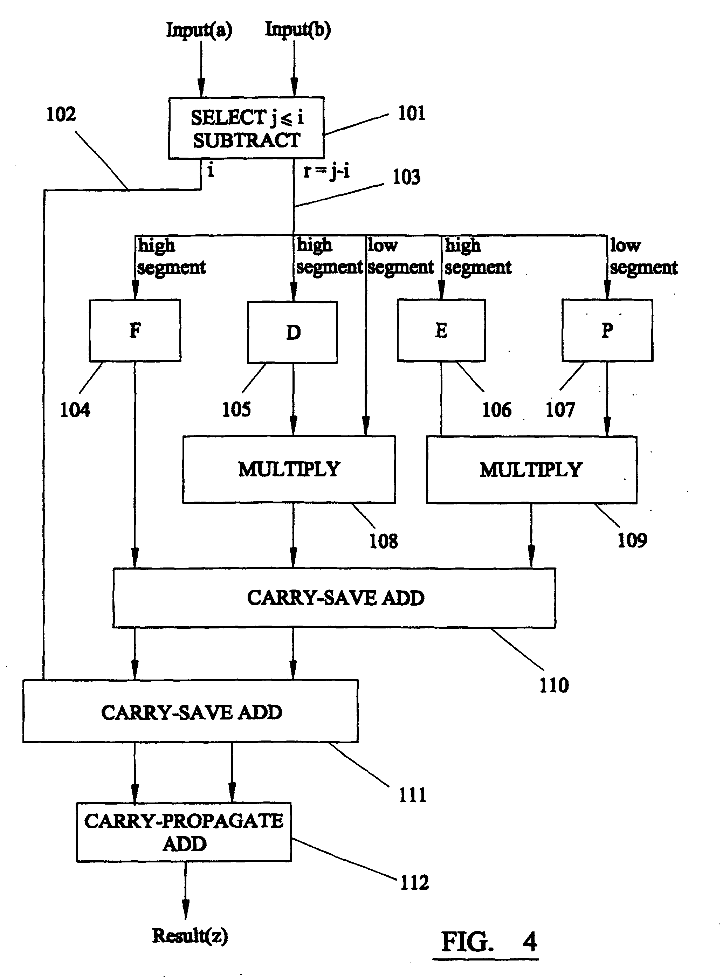

Referring to Figure 4, a logarithmic arithmetic apparatus embodied within a microprocessor has a selector/subtracter 101 having an output 102 representing i and an output 103 representing r=j-i. The output 103 of selector/subtracter 101 is input to a look up table 104 storing values of the function $F(r)$ at discrete values of r, a look up table 105 storing values of $D(r)$, the derivative or slope of $F(r)$ at discrete values of r, a look up table 106 storing values of $E(r)$, the difference between $[F(r) + \Delta.D(r)]$ and $F(r+\Delta)$ for each interval of width $\Delta$, and a look up table 107 for storing values of $P(\delta)$, the ratio of the difference between $F(r+\delta)$ and $[F(r) + \delta.D(r)]$ to $E(r)$ for a plurality of values of $\delta$.

The output 103 of selector/subtracter 101 is thus divided into a high order segment representing $n\Delta$ and a low order segment representing $\delta$, the high order segment being input to the look up tables 104, 105 and 106, and the low order segment being input to look up table 107. The low order segment is also input to a multiplier 108 together with the output of look up table 105 to produce an output representing the product of $\delta$ and the derivative $D(r)$. The outputs of look up tables 106 and 107 are input to a multiplier 109 which multiplies those quantities together to provide an output representing the error in the interpolated value of the function.

The outputs of look up table 104 and multipliers 108 and 109 are input to a carry-save-add stage 110, the two outputs of which are input to a further carry-save-add stage 111, to which the output 102 of selector/subtracter 101 is also input. The two outputs of carry-save-add stage 111 are then input to a carry-propagate-add stage 112, the output of which represents the value of the overall logarithmic function $i + \log_2(1+2^{j-i})$ to be calculated.

The operation of the apparatus shown in Figure 4 will now be described.

The values j and i are input to the selector/subtracter 101, as a result of which the output 103 of subtracter 101 causes simultaneous access to look up tables 104, 105, 106 and 107. The multiplier 108 then determines the product $\delta.D(r)$, while the multiplier 109 operates simultaneously to determine the product $E(r).P(\delta)$. The outputs of look up table 104 and multipliers 108, 109 are then added in carry-save-add stage 110 to determine the value of the logarithmic function $F(r)$. The remaining part i of the quantity to be evaluated is added to the value of $F(r)$ in carry-save-add stage 111 and input to the carry-propagate-add stage 112, which outputs the result to be determined.

The carry-save-add stages 110 and 111 do not significantly decrease the speed of calculation by the device, and decrease in the speed of calculation is avoided by simultaneous operation of look up tables 104, 105, 106 and 107, and simultaneous operation of multipliers 108 and 109. In a practical embodiment, the P look up table 107 is not implemented for all possible values of $\delta$ but instead is implemented at intervals throughout its range. In one practical embodiment of the invention, based on a forty bit Logarithmic Number System using a 4096 word P look up table 107, application of the invention improves the worst case error from around five thousand times the least significant bit, to around four times the least significant bit. In this case, the look up table capacity occupied by the new E look up table 106 and P look up table 107 is approximately the same as that already occupied by the F look up table 104 and D look up table 105. Thus the total table capacity is no more than doubled. With appropriate rounding, this forty bit system can be used to perform the internal operations of a 32 bit system, and when used in this way, worst case accuracy approaching 0.5 of a least significant bit is achievable.

It will be appreciated by persons skilled in the art that the above embodiment has been described by way of example only, and not in any limitative sense, and that various alterations and modifications are possible without departure from the scope of the invention as defined by the appended claims. For example, the invention can be used to determine many types of logarithmic function (i.e. a function having a logarithmic term) and not just the specific addition example set out above. Also, the interval $\Delta$ can be of constant or variable width over the intervals for which values are stored, with appropriate treatment of the input address to the F, D, E and P look up tables. The method of the invention can also be used for the logarithmic subtraction function set out on page 1, with the possible exception of the range r = 0 to r = -1. However, methods will be familiar to persons skilled in the art, for example J.N.Coleman "Simplification of Table Structure in Logarithmic Arithmetic", Electronics Letters, Vol. 31, 1995, pages 1905 to 1906, and the erratum Vol. 32, 1996, page 2103. By these methods, subtraction in this region may be avoided. It will also be appreciated by persons skilled in the art, as mentioned above, that the quantities E(x), P(δ), x and so on can be positive or negative as appropriate, and that adder stages may correspondingly be adder or subtracter as appropriate.

It will be further appreciated by persons skilled in the art that carry-propagate-add stages occurring within multipliers 108 and 109 could be replaced with additional carry-save-add stages between the output of the now reduced multipliers (previously indicated 108 and 109) and the final carry-propagate-add 112, to produce the same result.

## Claims

1. A logarithmic calculating apparatus for determining the approximate value of a logarithmic function F(x) at a value of x of interest, the apparatus comprising:

   first memory means (104) for storing values of the function F(x) for a plurality of discrete values of x;

   second memory means (105) for storing values of F'(x), the slope of the function F(x), for said plurality of discrete values of x;

   first multiplier means (108) for multiplying the value of F'(x) for a said discrete value of x adjacent to the value of x of interest by δ, the difference between said adjacent discrete value of x and the value of x of interest;

   said logarithmic calculating apparatus being **characterized by**

   third memory means (106) for storing values of E(x), the approximate difference between [F(x) + Δ.F'(x)] and F(x+Δ) where x and x+Δ are the adjacent pair of said discrete values of x nearest to the value of x of interest;

   fourth memory means (107) for storing values of P(δ), the ratio of (i) the difference between F(x+δ) and [F(x) + δ.F'(x)], to (ii) E(x) for a plurality of values of δ;

   second multiplier means (109) for multiplying together the outputs of said third and fourth memory means; and

   adder means (110, 111, 112) for adding together the outputs of said first memory means, said first multiplier means and said second multiplier means to produce an output representing the approximate value of F(x) at the value of x of interest.

2. An apparatus according to claim 1, wherein said first and second multiplier means operate substantially simultaneously in use.

3. An apparatus according to claim 1 or 2, further comprising at least one further adder means.

4. An apparatus according to any one of the preceding claims, wherein the or each adder means is a carry-save-add means cooperating with at least one carry-propagate add means.

5. An apparatus according to any one of the preceding claims, wherein said first, second, third and fourth memory means are accessed substantially simultaneously in use.

6. A microprocessor including a logarithmic calculating apparatus according to any one of the preceding claims.

7. A method of determining the approximate value of a logarithmic function F(x) at a value of x of interest in a logarithmic calculating apparatus, the method comprising the steps of:

   storing values of the function F(x) for a plurality of discrete values of x;

   storing values of F'(x), the slope of the function F(x), for said plurality of discrete values of x;

   multiplying the value of F'(x) for a said discrete value of x adjacent to the value of x of interest by δ, the difference between said adjacent discrete value of x and the value of x of interest;

   the method being **characterized by**

   storing values of E(x), the approximate difference between [F(x) + Δ.F'(x)] and F(x+Δ) where x and x+Δ are the adjacent pair of said discrete values of x nearest to the value of x of interest;

   storing values of P(δ), the ratio of (i) the difference between [F(x) + δ.F'(x)] and F(x+δ), to (ii) E(x) for a plurality of values of δ;

   multiplying together the values of E(x) and P(δ) for the value of x of interest; and

   adding together said values of F(x), δ.F'(x) and E(x).P(δ) to provide the approximate value of F(x) for the value of x of interest.

8. A method according to claim 7, wherein said multiplication steps are carried out substantially simultaneously.

9. A method according to claim 7 or 8, wherein said addition step is carried out by means of a carry-save-add stage cooperating with a subsequent carry-propagate-add stage.

10. A method according to any one of claims 7 to 9, wherein the stored values are accessed substantially simultaneously.

**Patentansprüche**

1. Logarithmische Recheneinrichtung zur Bestimmung des angenährten Wertes einer logarithmischen Funktion F (x) an einem interessierenden Wert x, wobei die Recheneinrichtung nachfolgende Merkmale enthält:

- 1. Speichermittel (104) zum Speichern von Werten der Funktion F (x) für eine Mehrzahl diskreter Werte für x,

- 2. Speichermittel (105) zum Speichern der Werte von F' (x), der 1. Ableitung der Funktion F (x) für die Anzahl diskreter Werte für x,

- 1. Multiplikationsmittel (108) zum Multiplizieren des Wertes von F' (x) für einen der diskreten Werte für x, der um $\delta$ neben dem interessierenden Werte für x liegt, wobei $\delta$ die Differenz zwischen dem benachbarten diskreten Wert für x und dem interessierenden Wert für x darstellt,

und die logarithmische Recheneinheit charakterisiert ist durch

- 3. Speichermittel (106) zum Speichern von Werten von E (x), der angenährten Differenz zwischen [F(x) + $\Delta$.F'(x)] und F(x + $\Delta$), wo x und x + $\Delta$ das benachbarte Wertepaar des diskreten Wertes für x darstellen, welcher dem interessierenden Wert für x am nächsten liegt,

- 4. Speichermittel (107) zum Speichern von Werten P ($\delta$), dem Verhältnis von (i) der Differenz zwischen F(x + $\delta$) und [F(x) + $\delta$.F'(x)], zu (ii) E(x) für eine Mehrzahl von Werten für $\delta$,

- 2. Multiplikationsmittel (109) zur Multiplikation der Ausgangswerte des 3. und 4. Speichermittels und

Addiermittel (110, 111, 112) zur Addition der Ausgangswerte des 1. Speichermittels, wobei durch das 1. Multiplikationsmittel und das 2. Multiplikationsmittel ein Ausgangswert erzeugt wird, der den angenäherten Wert von F(x) an der Stelle des interessierten Wertes für x darstellt.

2. Einrichtung gemäß Anspruch 1, **dadurch gekennzeichnet, dass** die 1. und 2. Multiplikationsmittel (108, 109) im Betrieb im wesentlichen gleichzeitig arbeiten.

3. Einrichtung gemäß der Ansprüche 1 oder 2, **dadurch gekennzeichnet, dass** diese zumindest ein weiteres Addiermittel enthält.

4. Einrichtung gemäß einem der vorhergehenden Ansprüche, **dadurch gekennzeichnet, dass** das oder jedes der Addiermittel ein Mitführ-/Speicher-Addiermittel ist, welches mit zumindest einem Mitführ-/Weiterleitungs-Addiermittel zusammenwirkt.

5. Einrichtung gemäß einem der vorhergehenden Ansprüche, **dadurch gekennzeichnet, dass** auf die 1., 2., 3. und 4. Speichermittel im wesentlichen gleichzeitig zugegriffen wird.

6. Mikroprozessor mit einer logarithmischen Recheneinrichtung gemäß einem der vorhergehenden Ansprüche.

7. Verfahren zur Bestimmung des angenäherten Wertes einer logarithmischen Funktion F(x) für einen interessierenden Wert x in einer logarithmischen Recheneinheit mit den nachfolgenden Verfahrensschritten:

- dem Speichern von Werten der Funktion F(x) für eine Mehrzahl diskreter Werte für x,

- dem Speichern der Werte für F'(x), der ersten Ableitung der Funktion F(x) für die Mehrzahl diskreter Werte für x,

- dem Multiplizieren der Werte für F'(x) für einen der diskreten Werte von x, der um $\delta$ neben dem interessierten Wert von x liegt, wobei $\delta$ die Differenz zwischen dem neben dem diskreten Wert von x und dem interessierenden Wert von x darstellt und

das Verfahren durch die nachfolgenden Verfahrensschritte gekennzeichnet ist:

- dem Speichern von Werten von E(x) der angenährten Differenz zwischen [F(x) + $\Delta \cdot$ F'(x)] und F(x + $\Delta$), wo x und x + $\Delta$ das benachbarte Wertepaar des diskreten Wertes für x darstellen, welches dem interessierenden Wert für x am nächsten liegt,

- dem Speichern von Werten von P(δ), das Verhältnis von (i), der Differenz zwischen [F(x) + δ • F'(x)] und F(x + δ), zu (ii) E(x) für eine Mehrzahl von Werten für δ darstellt,

- dem miteinander Multiplizieren der Werte von E(x) und P(δ) für den interessierenden Wert von x und

- dem Addieren der Werte von F(x), δ.F'(x) und E(x) • P(δ) zum Erhalten des angenährten Wertes für F(x) für den interessierenden Wert von x.

8. Verfahren gemäß Anspruch 7, **dadurch gekennzeichnet, dass** die Multiplikationsschritte im wesentlichen gleichzeitig durchgeführt werden.

9. Verfahren gemäß der Ansprüche 7 oder 8, **dadurch gekennzeichnet, dass** der Additionsschritt durch ein Mitführ-/Speicher-Addiermittel in Zusammenwirken mit einem nachfolgenden Mitführ-/Weiterleitungs-Addiermittel ausgeführt wird.

10. Verfahren gemäß einem der Ansprüche 7 bis 9, **dadurch gekennzeichnet, dass** auf die gespeicherten Werte im wesentlichen gleichzeitig zugegriffen wird.

**Revendications**

1. Appareil de calcul logarithmique pour déterminer la valeur approximative d'une fonction logarithmique F(x) à une valeur de x d'intérêt, l'appareil comprenant :

   des premiers moyens formant mémoire (104) pour stocker les valeurs de la fonction F(x) pour une pluralité de valeurs discrètes de x ;
   des deuxièmes moyens formant mémoire (105) pour stocker les valeurs de F'(x), la courbe de la fonction F(x), pour ladite pluralité de valeurs discrètes de x ;
   des premiers moyens formant multiplicateur (108) pour multiplier la valeur de F'(x), pour une dite valeur discrète de x adjacente à la valeur de x d'intérêt, par δ, la différence entre ladite valeur discrète adjacente de x et la valeur de x d'intérêt ;
   ledit appareil de calcul logarithmique étant **caractérisé par** :

   des troisièmes moyens formant mémoire (106) pour stocker les valeurs de E(x), la différence approximative entre [F(x) + Δ.F'(x)] et F(x+Δ), où x et x+Δ sont la paire adjacente desdites valeurs discrètes de x les plus proches de la valeur de x d'intérêt ;

   des quatrièmes moyens formant mémoire (107) pour stocker les valeurs de P(δ), le rapport de (i), la différence entre F(x+δ) et [F(x) + δ.F'(x)], à (ii) E(x) pour une pluralité de valeurs de δ;
   des deuxièmes moyens formant multiplicateur (109) pour multiplier ensemble les sorties desdits troisièmes et quatrièmes moyens formant mémoire ; et
   des moyens formant additionneur (110, 111, 112) pour additionner ensemble les sorties desdits premiers moyens formant mémoire, desdits premiers moyens formant multiplicateur et desdits deuxièmes moyens formant multiplicateur, afin de produire une sortie représentant la valeur approximative de F(x) à la valeur de x d'intérêt.

2. Appareil selon la revendication 1, dans lequel lesdits premiers et seconds moyens formant multiplicateurs opèrent de façon sensiblement simultanée.

3. Appareil selon la revendication 1 ou 2, comprenant en outre au moins des moyens formant additionneur supplémentaires.

4. Appareil selon l'une quelconque des revendications précédentes, dans lequel les ou chacun des moyens formant additionneur sont des moyens formant report-enregistrement-addition coopérant avec au moins des moyens formant report-propagation-addition.

5. Appareil selon l'une quelconque des revendications précédentes, dans lequel lesdits premiers, seconds, troisièmes et quatrièmes moyens formant mémoire sont accédés de façon sensiblement simultanée.

6. Un microprocesseur comprenant un appareil de calcul logarithmique selon l'une quelconque des revendications précédentes.

7. Une méthode pour déterminer la valeur approximative d'une fonction logarithmique F(x) à une valeur de x d'intérêt dans un appareil de calcul logarithmique, la méthode comportant les étapes consistant à :

   stocker les valeurs de la fonction F(x) pour une pluralité de valeurs discrètes de x ;
   stocker les valeurs de F'(x), la courbe de la fonction F(x), pour ladite pluralité de valeurs discrètes de x ;
   multiplier la valeur de F'(x), pour une dite valeur discrète de x adjacente à la valeur de x d'intérêt, par δ, la différence entre ladite valeur discrète adjacente de x et la valeur de x d'intérêt ; la méthode étant **caractérisée par** les étapes consistant à :

stocker les valeurs de E(x), la différence approximative entre [F(x) + $\Delta$.F'(x)] et F(x+$\Delta$), où x et x+$\Delta$ sont la paire adjacente desdites valeurs discrètes de x les plus proches de la valeur de x d'intérêt ;

stocker les valeurs de P($\delta$), le rapport de (i), la différence entre [F(x) + $\delta$.F'(x)] et F(x+$\delta$), à (ii) E(x) pour une pluralité de valeurs de $\delta$ ;

multiplier ensemble les valeurs de E(x) et P($\delta$) pour la valeur de x d'intérêt ; et

additionner lesdites valeurs de F(x), $\delta$.F'(x) et E(x).P($\delta$) pour fournir la valeur approximative de F(x) pour la valeur de x d'intérêt.

8. Méthode selon la revendication 7, dans laquelle lesdites étapes de multiplication sont exécutées de façon sensiblement simultanée.

9. Méthode selon la revendication 7 ou 8, dans laquelle ladite étape d'addition est exécutée au moyen d'une étape de report-enregistrement-addition coopérant avec une étape de report-propagation-addition suivante.

10. Méthode selon l'une quelconque des revendications 7 à 9, dans laquelle les valeurs stockées sont accédées de façon sensiblement simultanée.

Input(a)    Input(b)

SELECT j ≤ i
SUBTRACT

1

i        r = j-i

high            high            low
segment        segment        segment

F              D

2              3              4

MULTIPLY

5

CARRY-SAVE ADD

CARRY-PROPAGATE
ADD

6

FIG.    1

PRIOR ART

Result(z)

E

ε

δ

Δ

## FIG.    3

1.0

0.5   F(r)

0

-8    -7    -6    -5    -4    -3    -2    -1    0

r

## FIG.    2

FIG. 4